# EUROPÄISCHE PATENTSCHRIFT

(11) **EP 2 331 925 B1**
(45) Veröffentlichungstag und Bekanntmachung des Hinweises auf die Patenterteilung: **27.03.2013**
(21) Anmeldenummer: 09740249.9
(22) Anmeldetag: 05.10.2009
(51) Int. Cl.: G01L 7/08, G01L 23/10, G01L 23/08

(54) **SENSORMEMBRANE**
SENSOR MEMBRANE
MEMBRANE DE CAPTEUR

(30) Priorität: 09.10.2008 CH 16042008
(43) Veröffentlichungstag der Anmeldung: 15.06.2011
(73) Patentinhaber: Kistler Holding AG, 8408 Winterthur (CH)
(72) Erfinder: KUMMER, Adrian, CH-8001 Zürich (CH); SONDEREGGER, Christof, CH-8413 Neftenbach (CH)
(86) Internationale Anmeldenummer: PCT/CH2009/000317
(87) Internationale Veröffentlichungsnummer: WO 2010/040239

(56) Entgegenhaltungen:
- EP-A- 0 649 011
- US-A1- 2004 231 425

## Beschreibung

### Technisches Gebiet

Die Erfindung betrifft eine Sensormembrane, insbesondere für Druck- oder Kraftsensoren, der durch einen äusseren Rand und einen inneren Rand abgegrenzt ist, umfassend mindestens einen elastischen Bereich zwischen dem äusseren und dem inneren Rand mit einer dünnsten Stelle, wobei die Materialstärke innerhalb des elastischen Bereichs beidseitig dieser dünnsten Stelle stetig anwächst, nach dem Oberbegriff des Hauptanspruchs.

### Stand der Technik

Solche Membranen werden vorwiegend in Druck- oder Kraftsensoren verwendet. Sie dichten den Sensorinnenraum gegenüber der Aussenwelt ab und müssen dem Differenzdruck zwischen beiden Seiten standhalten. In der Regel sind Membranen axialsymmetrisch. Sie umfassen einen elastischen Bereich, der durch einen äusseren Rand und einen inneren Rand abgegrenzt ist. Der äussere Rand ist druckfest mit einem Sensorgehäuse verbunden, während der innere Rand druckfest in einen beweglichen Druckstempel übergeht, dessen Auslenkung von einem Messelement im Sensorgehäuse erfasst werden kann.

Fundamental andere Membranarten sind beispielsweise in Trommeln, Lautsprechern, Mikrophonen oder in anderen technischen Anwendungen eingesetzt. Sie bestehen aus planen oder geprägten Fliesen oder Folien, sind in der Regel nicht luftdicht und halten auch nicht Drücken von mehreren bar aus. Sie werden oft im Zusammenhang mit Schallwellen verwendet und sind daher auch keinen grossen Druckbelastungen ausgesetzt. Solche Membrane mit Durchmessern von mehreren Zentimetern oder gar Dezimetern müssen lediglich grosse Auslenkungen zulassen. Dies wird beispielsweise durch mehrere Wellen im elastischen Bereich erreicht, welche zu einer guten Elastizität führen. Die Materialstärke ist in diesen Bereichen aber stets konstant.

Ebenfalls fundamental andere Sensormembranen sind von ölgefüllten Drucksensoren bekannt. Solche Membranen sind oft aus weichen Metallen und weisen Wellen auf deren Oberflächen auf. Im Gegensatz zu den hier beschriebenen Membranen müssen sie aber keinen Druckdifferenzen standhalten, da stets ein Gegendruck in gleicher Höhe wie der auftretende Druck auf die Innenseite der Membrane wirkt.

Die Materialstärke von Membranen vieler Druck- oder Kraftsensoren weist etwa mittig im elastischen Bereich ein Minimum auf und wächst beidseitig des Minimums stetig an. Diese Art von Membranen ist beispielsweise in der CH 670310 bekannt. Der elastische Bereich ist im Querschnitt betrachtet beidseitig konkav, andere Applikationen sind plan-konkav.

Durch diese verringerte Materialstärke der Membrane, die in der Regel metallisch ausgestaltet ist, wird die Membrane elastisch. Die Festigkeit der Membrane nimmt mit Verringerung der minimalen Materialstärke ab, während die Elastizität dabei zunimmt. Das Gegenteil ist bei einer Erhöhung der minimalen Materialstärke der Fall. Dadurch sind Belastbarkeit und Elastizität aneinander gekoppelt. Daher wird beispielsweise, wenn die Festigkeit durch eine dickere Materialstärke erhöht werden soll, gleichzeitig die Elastizität der Membrane verringert, was zu einer erhöhten Einbauempfindlichkeit führt.

Andere Membranen für Druck- oder Kraftsensoren sind gleichmässig dünnwandig im elastischen Bereich mit konstanter Materialstärke. Dabei kann dieser dünne Bereich plan, gewölbt oder mehrfach gewölbt sein. Solche Membranen sind kostengünstig und werden in vielen Applikationen verwendet. Da ihre Güte betreffend der Relation zwischen Festigkeit und Elastizität aber viel geringer ist als die Güte von Membranen mit einer dünnsten Stelle, von der aus die Materialstärke beidseitig zunimmt, wird von solchen Membranen abgesehen.

In der US 2004/0231425 sind Drucksensoren mit verschiedenen Membranformen dargestellt. Die Materialstärke ist bei diesen Membranen meist gleichmässig dick oder weist mittig im elastischen Bereich ein Maximum auf. Solche Membranen werden vorwiegend in Hochtemperatur-Anwendungen eingesetzt. Ziel dieser Membranen ist es, Messfehler auf Grund von Materialausdehnungen zu verringern.

Aus der EP 649011 ist eine weitere Membranstruktur bekannt, welche in Druckaufnehmern Wärme kompensierende Wirkungen haben. Sie zeichnet sich durch zwei elastische, plan-konkav ausgestaltete Bereiche aus. Zwischen diesen Bereichen ist die Membrane mit gleichmässiger Materialstärke ausgestaltet und gegen den Druckstempel hin leicht zurückversetzt.

Solche Membranen haben sich als schwach erwiesen, wenn die Membran hohen Drücken resp. Kräften ausgesetzt ist. Da im Sensor hinter der Membran ein Hohlraum ist, der nicht Druckbeaufschlagt ist. Bei Hochdruckanwendungen resp. Aussetzungen von hohen Kräften kommt es bei solchen Membranen daher immer wieder zum Bruch der Membranen.

### Darstellung der Erfindung

Aufgabe der vorliegenden Erfindung ist es, eine eingangs beschriebene Sensormembran eines Druck- oder Kraftsensors zu beschreiben, die bei gleicher Elastizität eine erhöhte Festigkeit hat, um auch bei grösseren Differenzialdrücken einsetzbar zu sein.

Die Aufgabe wird gelöst durch die Kennzeichen des unabhängigen Patentanspruchs.

Die der Erfindung zugrunde liegende Idee besteht darin, dass der Querschnitt der Membrane im elastischen Bereich eine Bogenform darstellt mit einer konvexen äusseren und einer konkaven inneren Kontur, bezogen auf die Bogenausrichtung.

Es hat sich erwiesen, dass diese Querschnittsform im elastischen Bereich mit den beidseitig ausgestalteten, gleich gerichteten Bögen für eine hohe Belastbarkeit der Membrane sorgt. Zudem ist für die hohe Elastizität der Membrane wichtig, dass die Materialstärke im gesamten elastischen Bereich kontinuierlich bis zu einem Minimum stetig abnimmt und anschliessend wieder kontinuierlich zunimmt.

Es können auch mehrere elastische Bereiche zwischen dem äusseren und dem inneren Rand angeordnet sein. Diese sind dann an den dünnsten Stellen ähnlich dick ausgestaltet, damit deren Wirkung als Membran auch zum Tragen kommt. Um die erhöhte Last auszuhalten müssen dann entsprechend.alle elastischen Bereiche erfindungsgemäss ausgestaltet sein, solange die dünnsten Stellen ähnlich dick ausgestaltet sind. Wäre ein elastischer Bereich nicht derart erfindungsgemäss bogenförmig ausgestaltet, würde die Membrane insgesamt so schwach sein wie an dieser Stelle und bereits bei geringer Last brechen.

### Kurze Beschreibung der Zeichnungen

Im Folgenden wird die Erfindung unter Bezug der Zeichnungen näher erklärt. Es zeigen
- Fig. 1: eine schematische Darstellung eines Sensors nach dem Stand der Technik mit einem druckempfindlichen Messelement im Schnitt;
- Fig. 2: eine schematische Darstellung eines Sensors nach dem Stand der Technik mit einem optischen Messelement im Schnitt;
- Fig. 3: eine schematische Darstellung eines erfindungsgemässen Sensors mit einem druckempfindlichen Messelement im Schnitt;
- Fig. 4: eine schematische Darstellung eines erfindungsgemässen Sensors mit einem optischen Messelement im Schnitt;
- Fig. 5: eine schematische Darstellung eines alternativen erfindungsgemässen Sensors mit einem druckempfindlichen Messelement im Schnitt;
- Fig. 6: eine schematische Darstellung eines alternativen erfindungsgemässen Sensors mit einem optischen Messelement im Schnitt;
- Fig. 7: einen Ausschnitt einer schematischen Darstellung eines alternativen erfindungsgemässen Sensors im Schnitt;
- Fig. 8: einen Ausschnitt einer erfindungsgemässen Membrane im elastischen Bereich im Schnitt;
- Fig. 9: Schematischer Zusammenhang von Belastbarkeit und Elastizität bei verschiedenen Membranformen.

### Wege zur Ausführung der Erfindung

Die Bezugszeichen wurden in allen Zeichnungen beibehalten.

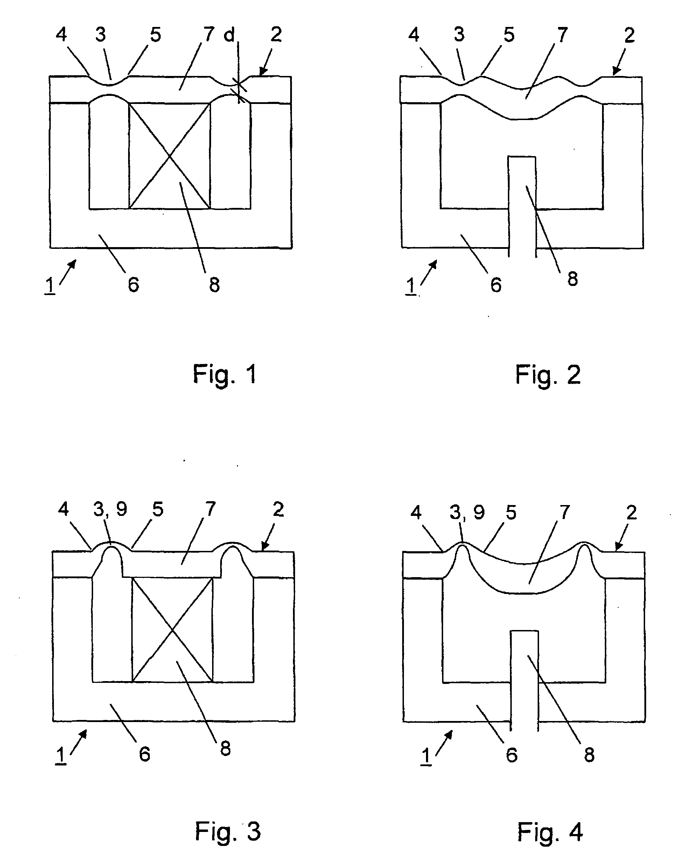

Die Fig. 1 und 2 zeigen je eine schematische Darstellung eines Sensors 1 nach dem Stand der Technik im Schnitt. Der Sensor 1 umfasst jeweils ein Gehäuse 6, in welchem ein Messelement 8 angeordnet ist. Das Gehäuse 6 ist mit einer Membrane 2 abgedichtet, welche bei einer Messung einer Kraft oder einem Druck von der Aussenseite her ausgesetzt ist. Die Membrane 2 ist in der Regel rund. Mittig weist sie einen Druckstempel 7 auf, dessen Auslenkung vom Messelement 8 erfasst werden kann.

In Fig. 1 ist das Messelement 8 ein Körper aus piezoelektrischem oder piezoresistivem Material, das sich direkt oder indirekt rückseitig am Gehäuse 6 abstützt und das die auf ihn von der Membrane 2 einwirkende Kraft messen kann.

In Fig. 2 ist das Messelement 8 eine optische Faser, welche die Auslenkung der Membrane 2 messen kann, indem Licht von ihr gegen die Membrane 2 ausgesandt und daran reflektiert wird, von der Faser wieder aufgenommen und anschliessend in einem Auswertesystem auf Grund des zurückgelegten Weges ausgewertet wird.

Die Membrane 2 umfasst jeweils einen elastischen Bereich 3, der durch einen äusseren Rand 4 und einen inneren Rand 5 abgegrenzt ist. Der äussere Rand 4 ist druckfest mit dem Sensorgehäuse 6 verbunden und der innere Rand 5 geht druckfest in den beweglichen Druckstempel 7 über. Dieser elastische Bereich 3 muss bei einer Messung den Belastungen standhalten, die von aussen auf die Membrane 2 einwirken. Bei der vorgesehenen Belastung darf sie demnach weder reissen noch sich plastisch verformen und sollte auch einen möglichst geringen Kraftnebenschluss verursachen. Die hier dargestellte Membrane 2 ist im elastischen Bereich im Querschnitt betrachtet beidseitig konkav ausgestaltet mit einer Materialstärke d, die mittig minimal ist und beidseitig zunimmt. Plan-konkave Ausgestaltungen sind auch bekannt.

Der Druckstempel kann alternativ auch, wie in der CH 670310, ringförmig ausgestaltet sein, wodurch die Membrane jeweils innerhalb und ausserhalb des Rings einen elastischen Bereich aufweist. Der zentrale Bereich der Membrane ist in diesem Fall wie der äussere Rand druckfest mit dem Gehäuse verbunden.

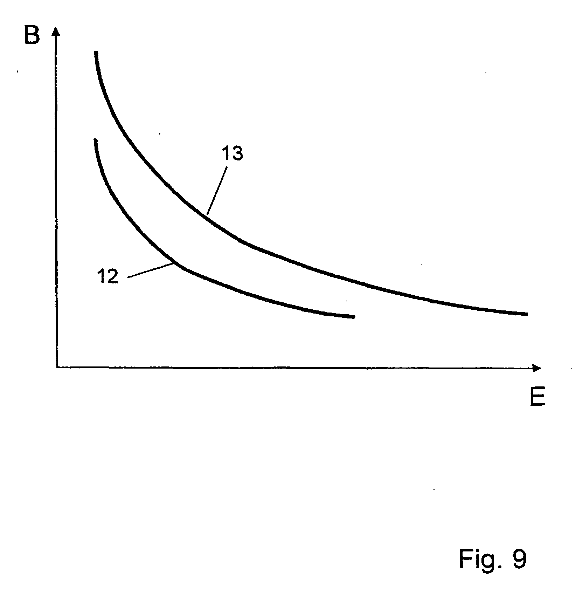

In Fig. 9 ist der Zusammenhang von Belastbarkeit und Elastizität einer Membrane 2 angegeben. Die Grenze der Belastbarkeit kann durch einen Bruch oder einen Riss der Membrane oder und deren plastische Umformung festgestellt werden. Dies bedeutet jeweils eine Zerstörung des Sensors.

Der Kurvenverlauf 12 einer herkömmlichen Membrane 2 nach dem Stand der Technik zeigt die feste Verknüpfung von Belastbarkeit und Elastizität. Je nach dem, wie dick die minimale Materialstärke d₁ einer Membrane ausgestaltet ist, nehmen Belastbarkeit und Elastizität invers zueinander zu oder ab, Es gelingt mit der herkömmlichen Technik nicht, diese Linie zu verlassen und somit bessere Membranen zu schaffen, die bei gleicher Elastizität eine höhere Belastbarkeit aufweisen.

Genau dies ist aber der Fall, wenn die Membrane erfindungsgemäss ausgestaltet ist. Eine solche erfindungsgemässe Membrane 2 weist bei gleicher Elastizität eine höhere Belastbarkeit auf. Daher ist der Kurvenverlauf 13, der die Relation von Elastizität und Belastbarkeit einer erfindungsgemässen Membrane 2 angibt, zu einer höheren Belastbarkeit verschoben.

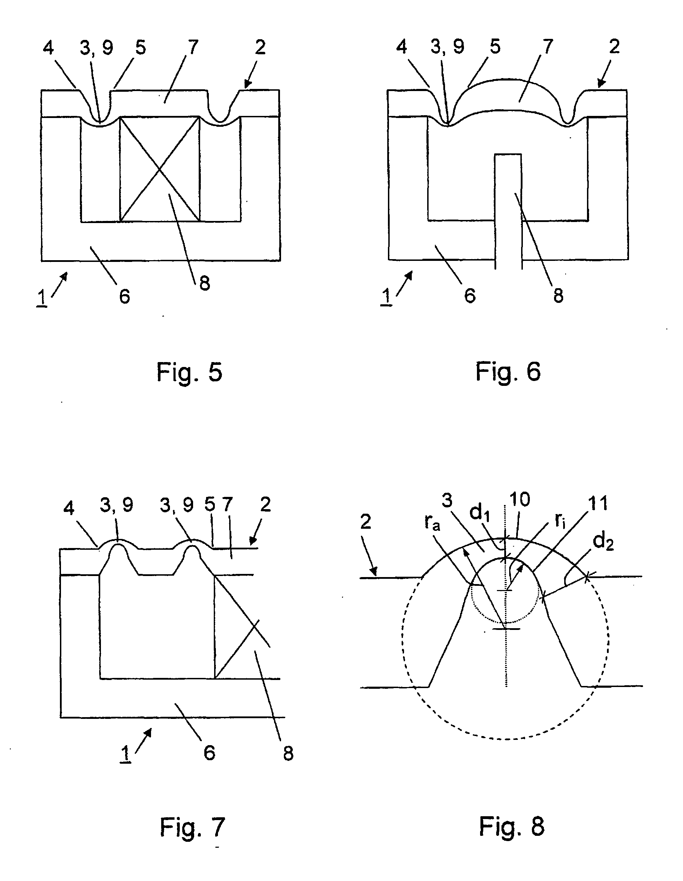

Solche erfindungsgemässe Membranen 2 sind in Fig. 3-6 dargestellt. Fig. 3 und 5 sind Ausführungen mit einem piezoelektrischen oder piezoresistiven Messelement 8, Fig. 4 und 6 mit optischen Messelementen 8. Der Grundaufbau mit dem Gehäuse 6 und der dicht daran angebrachten Membrane 2 entsprechen im Weiteren dem herkömmlichen Aufbau nach Fig. 1 und 2.

Die beschriebene alternative Ausgestaltung mit einem Ringstempel gilt für die erfindungsgemässen Ausgestaltungen der Sensormembran ebenso.

Bei den erfindungsgemässen Membranen 2 der Fig. 3-6 weist der elastische Bereich 3 mittig wiederum eine minimale Materialstärke d₁ auf, welche zu beiden Seiten hin dicker wird. Anstelle der konkav-konkaven Kontur im Querschnitt ist die Kontur des Querschnitts der erfindungsgemässen Membrane 2 konvex-konkav und beschreibt somit eine Bogenform. Der Bogen weist eine konvexe äussere 10 und eine konkave innere Kontur 11 auf. Die Begriffe "innen" und "aussen" beziehen sich wiederum auf die Ausrichtung der Bogenform und nicht auf die Aussen- oder Innenseite des Sensorgehäuses. Der Bogen wölbst sich somit aus der Ebene der Membrane 2 hervor. Angemerkt sei hier, dass konkavkonvex nicht dasselbe ist wie konvex-konkav. Bei nicht beanspruchten konvex-konkaven Konturen ist der kleinere der beiden Krümmungsradien rᵢ auf der Innenseite des Bogens, welcher etwa mittig die dünnste Materialstärke d₁ aufweist und gegen aussen dicker wird. Bei konkav-konvexen Konturen ist das Gegenteil der Fall: Der kleinere der beiden Krümmungsradien ist auf der Aussenseite des Bogens. Dadurch ist der Bogen mittig am dicksten und wird gegen aussen stetig dünner. Eine solche Kontur ist nicht vorteilhaft für einen elastischen Bereich 3 einer Membrane 2 und daher auch nicht beansprucht.

In der Fig. 8 ist der elastische Bereich 3 einer erfindungsgemässen Membrane 2 dargestellt. Die dünnste Materialstärke d₁ ist in der Mitte dieses Bereichs. Vorzugsweise ist eine oder beide der Konturen 10, 11 des elastischen Bereichs 3 mindestens teilweise durch Kreisbögen definiert. In Fig. 8 ist der Aussenradius der konvexen Kontur mit rₐ angegeben und der Innenradius der konkaven Kontur mit rᵢ. Dabei ist ersichtlich, dass rₐ deutlich grösser ist als rᵢ. Auch wenn die äussere und/oder die innere Kontur keine Kreisradien beschreiben, so trifft dasselbe doch auch für die jeweiligen Krümmungsradien an der dünnsten Stelle des elastischen Bereichs 3 zu.

Beispielsweise weist die konkave Bogenseite 11 des elastischen Bereichs 3 einen Krümmungsradius rᵢ zwischen 0.1 und 2.5 mm auf, während die konvexe Bogenseite 10 des elastischen Bereichs 3 einen Krümmungsradius rₐ zwischen 0.5 und 5 mm aufweist.

Die Materialstärke nimmt gegen die Ränder der Membrane 2 zu. Erfindungsgemäss ist die Materialstärke d₂ am Rand des Bogens 9 mindestens 1.3 mal so gross wie die mittige Materialstärke d₁. Sehr gute Resultate werden erzielt mit Materialstärken d₂ am Rand des Bogens 9, die 1.5 bis 2 mal so gross sind wie d₁. Diese Verhältnisse gewähren ein gleichmässiges Spannungsfeld einer Membrane 2 bei einer Belastung, ohne lokale Spannungsmaxima unter Last zu erfahren. Dadurch wird die Belastbarkeit bei gleicher Elastizität erhöht.

Eine erfindungsgemässe Membrane 2 kann somit auch bei geringen Mindest-Materialstärken d₁ noch einen Differenzdruck von mindestens 10 bar aushalten. Vorzugsweise werden erfindungsgemässe Membranen aber für Drucksensoren, insbesondere Hochdrucksensoren eingesetzt, beispielsweise in Brennräumen. Druckbelastungen von 10'000 bar müssen für solche Anwendungen ausgehalten werden.

Gute Resultate für solche Anwendungen werden mit Membranen 2 erzielt, deren dünnste Materialstärke d₁ des elastischen Bereichs 3 zwischen 0.02 und 1 mm beträgt.

Untersuchungen haben ergeben, dass es für die Elastizität einer Membran unerheblich ist, ob der Bogen 9 nach aussen oder nach innen gerichtet ist. Beide Anordnungen haben gute Resultate erzielt. Für die Belastbarkeit ist der Bogen dach aussen vorteilhafter. Andererseits kann aus Platzgründen eine Membran mit nach innen ausgestaltetem Bogen bevorzugt sein.

Eine weitere Möglichkeit zur Verbesserung einer Membrane 2 besteht darin, dass zwei erfindungsgemässe elastische Bereiche 3 nebeneinander angeordnet sind, wie in Fig. 7 dargestellt. Weitere elastische Bereiche 3 haben keine Verbesserung erzielt. Demnach sind explizit genau eine oder genau zwei elastische Bereiche 3 empfehlenswert. Ein weiterer elastischer Bereich wirkt nur als solcher und wird daher nur als tatsächlicher elastischer Bereich betrachtet, wenn seine dünnste Materialstärke ähnlich dick ist wie die des ersten elastischen Bereichs.

Erfindungsgemäss ist die Membrane 2 vorzugsweise aus Metall, Glas, Keramik, Ein-Kristall wie Saphir oder Quarz oder aus metallischem Glas.

### Bezugszeichenliste

- 1: Sensor
- 2: Sensormembrane, Membrane
- 3: Elastischer Bereich
- 4: Äusserer Rand
- 5: Innerer Rand
- 6: Sensorgehäuse, Gehäuse
- 7: Druckstempel
- 8: Messelement
- 9: Bogen
- 10: Konvexe, äussere Kontur des Bogens im Querschnitt
- 11: Konkave, innere Kontur des Bogens im Querschnitt
- 12: Kurvenverlauf einer herkömmlichen Membran
- 13: Kurvenverlauf einer erfindungsgemässen Membran

- B: Belastbarkeit
- D: dünnste Stelle der Membran
- E: Elastizität

- d: Materialstärke der Membrane
- d₁: Materialstärke mittig im elastischen Bereich
- d₂: Materialstärke am Rand des Bogens
- rᵢ: Radius der konkaven inneren Kontur des Bogens
- rₐ: Radius der konvexen äusseren Kontur des Bogens

## Patentansprüche

1. Sensormembrane, insbesondere für einen Druck- oder Kraftsensor (1), der durch einen äusseren Rand (4) und einen inneren Rand (5) abgegrenzt ist, wobei der äussere Rand (4) druckfest mit einem Sensorgehäuse (6) verbunden ist und der innere Rand (5) druckfest in einen beweglichen Druckstempel (7) übergeht, dessen Auslenkung von einem Messelement (8) im Sensorgehäuse (6) erfasst werden kann, umfassend einen oder mehrere elastische Bereiche (3) zwischen dem äusseren Rand (4) und dem inneren Rand (5) mit je einer dünnsten Stelle (D), wobei die Materialstärke (d) innerhalb des elastischen Bereichs (3) beidseitig dieser dünnsten Stelle (D) stetig anwächst, **dadurch gekennzeichnet, dass** der Querschnitt der Membrane in jedem elastischen Bereich (3) eine Bogenform (9) darstellt mit einer konvexen äusseren (10) und einer konkaven inneren (11) Kontur, bezogen auf die Bogenausrichtung.

2. Membrane nach Anspruch 1, **dadurch gekennzeichnet, dass** eine oder beide Konturen (10, 11) des elastischen Bereichs (3) mindestens teilweise durch Kreisbögen definiert ist.

3. Membrane nach Anspruch 1 oder 2, **dadurch gekennzeichnet, dass** die Materialstärke (d₂) am Rand des Bogens (9) mindestens 1.3 mal so gross ist wie mittig (d₁).

4. Membrane nach einem der vorhergehenden Ansprüche, **dadurch gekennzeichnet, dass** die Membrane einen Differenzdruck von mindestens 10 bar aushalten kann.

5. Membrane nach einem der vorhergehenden Ansprüche, **dadurch gekennzeichnet, dass** die konkave Bogenseite (11) des elastischen Bereichs (3) einen Krümmungsradius zwischen 0.1 und 2.5 mm aufweist.

6. Membrane nach einem der vorhergehenden Ansprüche, **dadurch gekennzeichnet, dass** die konvexe Bogenseite (10) des elastischen Bereichs (3) einen Krümmungsradius zwischen 0.5 und 5 mm aufweist.

7. Membrane nach einem der vorhergehenden Ansprüche, **dadurch gekennzeichnet, dass** die dünnste Materialstärke (d₁) des elastischen Bereichs (3) zwischen 0.02 und 1 mm beträgt.

8. Membrane nach einem der vorhergehenden Ansprüche, **dadurch gekennzeichnet, dass** der Bogen (9) nach aussen gerichtet ist.

9. Membrane nach einem der vorhergehenden Ansprüche, **dadurch gekennzeichnet, dass** der Bogen (9) nach innen gerichtet ist.

10. Membrane nach einem der vorhergehenden Ansprüche, **dadurch gekennzeichnet, dass** die Membran zwischen dem inneren (5) und dem äusseren Rand (4) genau eine oder genau zwei elastische Bereiche (3) aufweist mit jeweils einer konvexen äusseren (10) und einer konkaven inneren Kontur (11).

11. Membrane nach einem der vorhergehenden Ansprüche, **dadurch gekennzeichnet, dass** die Membran aus Metall, Glas, Keramik, Kristall oder aus metallischem Glas ist.

12. Sensor umfassend eine Membrane nach einem der vorhergehenden Ansprüche.

13. Sensor nach Anspruch 12, **dadurch gekennzeichnet, dass** der Sensor ein Drucksensor, insbesondere ein Hochdrucksensor oder/und ein Brennraumdrucksensor ist.

14. Sensor nach einem der vorhergehenden Ansprüche 12 bis 13, **dadurch gekennzeichnet, dass** der Sensor ein piezoelektrischer, piezoresistiver oder optischer Sensor ist.

## Claims

1. A sensor membrane especially for use in a pressure or force sensor (1) delimitated by an outer edge (4) and an inner edge (5) wherein said outer edge (4) is connected in a pressure-resistant manner to a sensor housing (6) and said inner edge (5) is contiguous in a pressure-resistant manner with a moveable plunger (7), the travel of which can be detected by a measuring element (8) within the sensor housing (6), comprising one or more elastic regions (3) between said outer edge (4) and said inner edge (5), each region having a thinnest point (D), wherein the material thickness (d) inside the elastic region (3) on both sides of this thinnest point (D) increases steadily, **characterized in that** the cross-section of the membrane in each elastic region (3) has an arcuate shape (9) exhibiting a convex outer (10) and concave inner contour (11) relative to the orientation of the arc.

2. The membrane according to claim 1 **characterized in that** one or both contours (10, 11) of the elastic region (3) is defined at least in part by circular arcs.

3. The membrane according to claim 1 or 2 **characterized in that** the material thickness (d₂) at the edge of the arc (9) is at least 1.3 times as great as that at the center (d₁).

4. The membrane according to any of the preceding claims **characterized in that** the membrane can withstand a pressure difference of at least 10 bar.

5. The membrane according to any of the preceding claims **characterized in that** the concave arc face (11) of the elastic region (3) has a radius of curvature of between 0.1 and 2.5 mm.

6. The membrane according to any of the preceding claims **characterized in that** the convex arc face (10) of the elastic region has a radius of curvature of between 0.5 and 5 mm.

7. The membrane according to any of the preceding claims **characterized in that** the thinnest material thickness (d₁) of the elastic region (3) is between 0.02 and 1 mm.

8. The membrane according to any of the preceding claims **characterized in that** the arc (9) is directed outwards.

9. The membrane according to any of the preceding claims **characterized in that** the arc (9) is directed inwards.

10. The membrane according to any of the preceding claims **characterized in that** the membrane between said inner edge (5) and said outer edge (4) has precisely one or precisely two elastic regions (3) having respectively one convex outer contour (10) and one concave inner contour (11).

11. The membrane according to any of the preceding claims **characterized in that** the membrane is made of metal, glass, ceramic, crystal or metallic glass.

12. A sensor comprising a membrane according to any of the preceding claims

13. The sensor according to claim 12 **characterized in that** said sensor is a pressure sensor, in particular a high pressure sensor and/or a combustion chamber pressure sensor.

14. The sensor according to any of the preceding claims 12 to 13 **characterized in that** said sensor is a piezoelectric, a piezoresistive or an optical sensor.

## Revendications

1. Une membrane de capteur notamment pour un capteur de pression ou de force (1) délimitée par un bord extérieur (4) ainsi qu'un bord intérieur (5) ledit bord extérieur (4) étant relié de manière résistante à la pression à un boîtier de capteur (6) et ledit bord intérieur (5) étant contigu de manière résistante à la pression à un piston mobile (7), dont la déviation peut être détectée par un élément de mesure (8) au sein du boîtier de capteur (6), comprenant une ou plusieurs régions élastiques (3) entre ledit bord extérieur (4) et ledit bord intérieur (5), chaque région ayant un point le plus mince (D), l'épaisseur du matériel (d) à l'intérieur de la région élastique (3) de part et d'autre du point le plus mince (D) augmentant constamment, **caractérisée en ce que** le diamètre de la membrane dans chaque région élastique (3) est d'une forme arquée (9) présentée avec un contour convexe extérieur (10) et concave intérieur (11) en rapport à l'orientation de l'arc.

2. La membrane selon la revendication 1 **caractérisée en ce que** l'un ou les deux contours (10, 11) de la région élastique (3) sont définis au moins en partie par des arcs circulaires.

3. La membrane selon la revendication 1 ou 2 **caractérisée en ce que** l'épaisseur du matériel (d₂) au bord de l'arc (9) est au moins 1,3 fois l'épaisseur du milieu (d₁).

4. La membrane selon l'une ou l'autre des revendications précédentes **caractérisée en ce que** ladite membrane est apte à résister à une différence de pression d'au moins 10 bar.

5. La membrane selon l'une ou l'autre des revendications précédentes **caractérisée en ce que** la face concave de l'arc (11) de la région élastique (3) a un rayon de courbure entre 0,1 et 2,5 mm.

6. La membrane selon l'une ou l'autre des revendications Précédentes **caractérisée en ce que** la face convexe de l'arc (10) de la région élastique (3) a un rayon de courbure entre 0,5 et 5 mm.

7. La membrane selon l'une ou l'autre des revendications précédentes **caractérisée en ce que** l'épaisseur du matériel le plus mince (d₁) de la région élastique (3) est entre 0,02 et 1 mm.

8. La membrane selon l'une ou l'autre des revendications précédentes **caractérisée en ce que** l'arc (9) est orienté à l'extérieur.

9. La membrane selon l'une ou l'autre des revendications précédentes **caractérisée en ce que** l'arc (9) est orienté à l'intérieur.

10. La membrane selon l'une ou l'autre des revendications précédentes **caractérisée en ce que** ladite membrane a, entre ledit bord intérieur (5) et ledit bord extérieur (4), précisément une ou précisément deux régions élastiques (3) chacune ayant un contour convexe extérieur (10) et un contour concave intérieur (11).

11. La membrane selon l'une ou l'autre des revendications précédentes **caractérisée en ce que** ladite membrane est fabriquée de métal, de verre, de céramique, de cristal ou de verre métallique.

12. Un capteur comprenant une membrane selon l'une ou l'autre des revendications précédentes.

13. Le capteur selon la revendication 12 **caractérisé en ce que** ledit capteur est un capteur de pression, en particulier un capteur à haute pression et/ou un capteur dans une chambre de combustion.

14. Le capteur selon l'une ou l'autre des revendications 12 à 13 précédentes **caractérisé en ce que** ledit capteur est un capteur piézoélectrique, piézorésistive ou optique.
